Europäisches Patentamt

European Patent Office

Office européen des brevets

(19)

(11) Publication number: **0 059 821**
**B1**

## EUROPEAN PATENT SPECIFICATION

(45) Date of publication of patent specification: **25.07.84**

(21) Application number: **81850041.5**

(22) Date of filing: **11.03.81**

(51) Int. Cl.³: **H 04 L 1/10, H 03 K 13/32, H 04 L 11/16, G 06 F 11/00**

(54) Method and apparatus, e.g. in a data distribution system for, inter alia, avoiding distortion in transfer of signal states.

(43) Date of publication of application:
**15.09.82 Bulletin 82/37**

(45) Publication of the grant of the patent:
**25.07.84 Bulletin 84/30**

(84) Designated Contracting States:
**AT BE CH DE FR GB IT LI LU NL SE**

(56) References cited:
**EP - A - 0 009 549**
**EP - A - 0 019 689**
**DE - A - 2 213 062**
**DE - A - 2 259 223**
**DE - A - 2 260 850**
**DE - A - 2 504 429**
**GB - A - 1 515 430**
**US - A - 3 820 083**

(73) Proprietor: **KB ALF ÖNNESTAM ALFADATA**
**Göran Perssons väg 37**
**S-171 55 Solna (SE)**

(72) Inventor: **Önnestam, Alf Gunnar**
**Stafflivägen 6**
**S-196 32 Kungsängen (SE)**

(74) Representative: **Grahn, Thomas**
**Oscar Grahn Patentbyra AB Erik Lindquist**
**Patentbyra AB P.O. Box 7355**
**S-103 90 Stockholm (SE)**

Courier Press, Leamington Spa, England.

## Description

Technical area

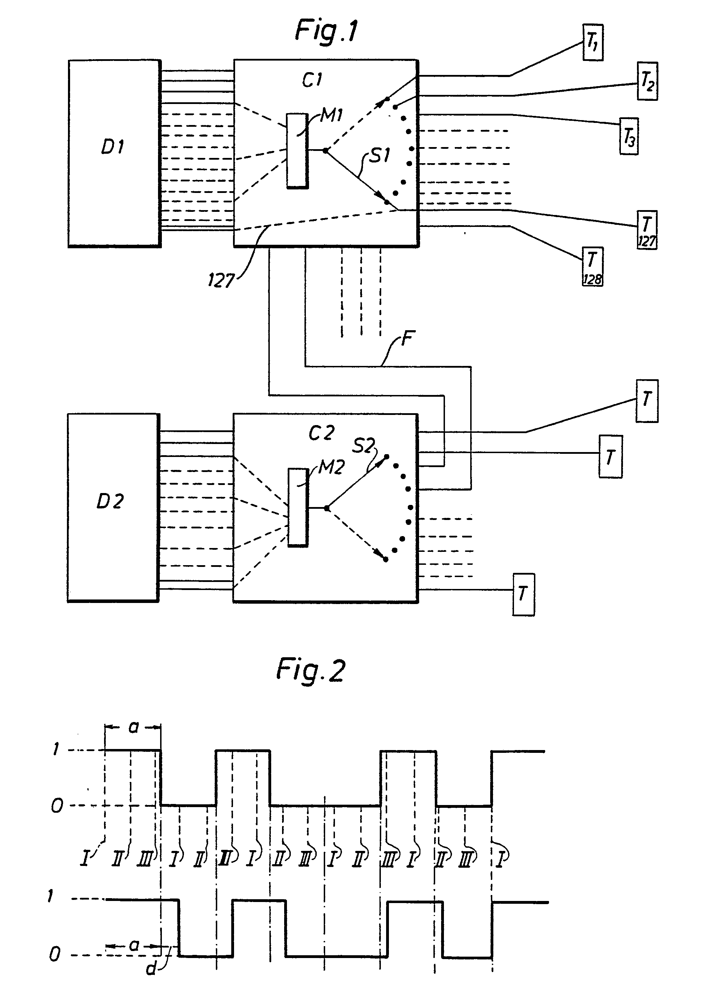

In communication between computers and terminals there is sometimes a communication problem concerning distortion of the individual signal elements or bits, in cases where contention units are used as an intermediate connection link between computers and terminals. In order to more clearly explain the occurrence of such distortion, a conventional data system with contention units will be described with reference to Figures 1—3 on the appended drawings. The examples described below are included in the art on which the present invention is based, and have the problem mentioned above, this problem is being one of those for which the present invention proposes a solution.

Prior art

Figure 1 schematically illustrates two data systems and the intercoupling facilities therebetween.

Figure 2 illustrates curves formed by signal states in operation of the system according to Figure 1.

Figure 3 illustrates a further known apparatus.

In Figure 1 there are shown two digitally operating computers D1 and D2. In practice, the computers can be placed in geographically separated locations. Each computer is provided with connections, e.g. sixtyfour communication channels. It is desirable to have the availability of connecting more channels, e.g. 128 channels to one of the computers, say D1, said terminals being schematically illustrated on the figure and denoted by $T_1$, $T_2$ .... $T_{128}$.

So called contention units C1 and C2 are connected between computer and terminals for accommodating this need in practice.

A contention unit can be regarded as a form of advanced telephone exchange. Its general function is such that if a terminal $T_1$ .... $T_{128}$ calls, the unit C1 replies automatically and requests information on where the terminal user wishes to be connected. If the user wants to be connected with an input of the computer D1, this can be done directly in a manner of exchange, and in the present case there is indicated on Figure 1 a dashed connection denoted 127 between the terminal $T_{127}$ and the sixtyfourth connection on the computer D1.

However, should more than sixtyfour terminals, which is the computer's maximum number of communication channels, need to be connected simultaneously, a scanning device must come between computer and terminals to coordinate the communication, said device periodically scanning the condition of the different terminal lines connected. In practice, not all terminals are in operation, i.e. change states simultaneously, although they stand connected to the computer. This signifies that during long periods one and the same terminal have the same output state, i.e. a "1" or a "0" in the present binary application. Selective traffic distribution is therefore provided by the scanning device, such a device may symbolically be depicted as a contact arm sweeping backwards and forwards over a plurality of contacts corresponding to the number of communication lines from the respective terminals. Such an arm is denoted by S1 in the connection unit C1 and by S2 in the unit C2. Each arm is connected to a respective memory unit M1, M2, for transfer of data to the sixtyfour computer lines. The function and sequence discussed will be seen from Figure 2 also.

It is assumed that the upper curve in Figure 2 illustrates a consecutive series of states at the terminal $T_1$ during a given period of time. When the arm S1 sweeps over the contacts to the terminal connections, the binary value is read and stored in the memory M1 for each contacting step. It is assumed that at least three scannings are contained during the shortest interval which is practicable for the state change of the terminal in question.

The dashed lines plotted on the curve of Figure 2 indicate different scanning occations separated in time and are donated by I, II and III. The lower curve in Figure 2 illustrates the resulting values obtained by these scans, and which are stored in the memory M1. The length of the first curve section in the upper curve of Figure 2, referring to terminal $T_1$, has a length a. In the lower curve it will be found that the first scan I has detected a "1" state. Scans II and III also show an unaltered "1" condition. The successive scan, i.e. the repeated scan I, indicates that the state has now been changed to "0". However, the change thus indicated does not occur before the curve portion has encroached a distance in the area of the adjacent curve portion of the upper curve. This signifies that a representation of the state of the terminal $T_1$ has been obtained (the lower curve), which is no longer equal to a, but constitutes a distance a + d, i.e. the distance from the trailing flank of the upper curve to the trailing flank of the lower curve. A distortion of the bit representing the first state of the terminal $T_1$ has thus occured. If the upper and lower curves of Figure 2 are examined together, it will be noted that there are differences between the curves, i.e. distortions caused by the instantaneous condition of the states obtained, from the scans. The distortion "d" obtained can vary from 0% to about 33%, as can be seen from Figure 2.

Such distortions can easily result in that bits loose their actuating function. Turning once again to Figure 1 and assuming the case that one of the terminal users from 1 to 128 desires contact with the computer D2 it will be seen that communication is first made via the connection unit C1 and, as is apparent from the connection F, for example, subsequently to the input side of the contention unit C2. In the hook-up case in question, both scanning devices S1 and S2 will function individually for providing the required communication distribution. If a 30% distortion is now introduced by the scanning device S1 on one occasion and this is transferred to the contention unit C2 via F and further distorted 30% there, a total distortion of 60% is obtained. This will result in that the state which is to be transferred being all too short for the computer to be recognised, resulting in a sudden loss of a bit. This of course is a serious disdavantage.

The technique described above is known as time division multiplexing. In this connection it should be noted that there is a certain lag in data transmission for such systems as well. The information obtained must be registered for each scan, and the memory store must subsequently be read off for transferring the information, to the computer. Since the time lag only attains some fraction of a microsecond it is negligible in practice.

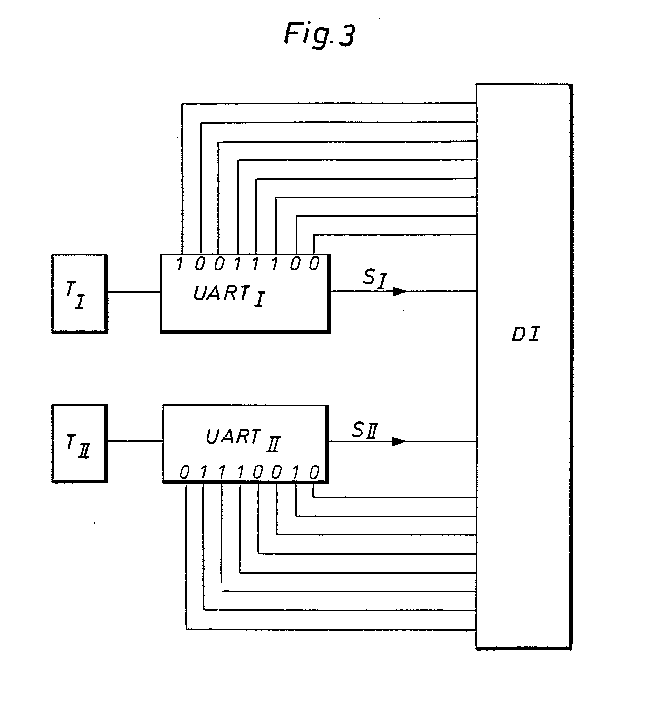

Time lag is not a negligible parameter in other types of system, however, where electronic circuits for conversion of serial to parallel data and vice versa are used. The UART (Universal Asynchronous Receive Transmit) type of the circuit is used in such systems. Scanning as in the system of Figure 1 is not used. In the apparatus according to Figure 3, the UART circuit is used to clock in bits from the respective terminal, this circuit containing, for example, eight "positions" (ASC II code) which can be arranged in 256 combinations. A terminal such as $T_1$ transmits a character to the UART circuit, subsequent to which this circuit automatically gives a signal on the line S1 for transfer of bits to the computer D1. these bits being formed into the message 10011100 assigned for the purpose in this case. The transfer takes place instantaneously and without scanning. After transfer, the computer can clock out the bits in series via a further UART circuit (not shown). Let it now be assumed that a large number of terminals send simultaneously, or substantially simultaneously. A queue problem occurs at once, and therefore transfer priority must be resorted to. The result of this can be undesirable delays in transferring. The problem occurs particularly when many terminals are connected to a computer installation. No distortion or other disturbance occurs in such systems as is the case described with reference to Figures 1 and 2, but varying delays must be reckoned with. Furthermore, a UART circuit must be initially adjusted to code format as well as transfer speed for the system in question before data transmission takes place.

All the systems described above, which are often used in practice, are thus burdened with restricting drawbacks from the point of view of communication. The system illustrated in Figures 1 and 2 has distortion as a discomforting problem, as well as limitation of the number of terminal connections in relation to scanning rate. The system illustrated in Figure 3 is, as mentioned, burdened with varying delays and so called data transparency is not obtained after connection to the computer. The communication occurs intermittently since each UART unit must be charged to full combination before a signal to the computer can be transmitted for transfer to the digital state obtained.

The invention

The present invention relates to a method and apparatus solving the problems in question in a practical and satisfactorily way. The method in accordance with the invention is mainly characterized in that each state or series of states which are to be transferred are accompanied by a time marker generated in conjunction with the transfer in response to the actual time given by a cyclically operating reference clock, said state, or series of states with their time marker being stored after transfer in a circuit coacting with the reference clock, said state or series of states being transferred to the destination, when the clock shows a time corresponding to that of the time marker, whereby each state or series of states will be delayed a predetermined time while retaining the same mutual time differences between the states or series of states.

An apparatus in accordance with the invention for carrying out the method is mainly characterized by a cyclically operating reference clock common to certain transferring means, each state or series of states in conjunction with transfer being accompanied by a time marker which is dependent on the instant of time read by a registration circuit from the reference clock whereby said state or series of states are arranged for being applied to a receiver in connection with the state receiving unit, and whereby the receiver is in coacting communication with the reference clock such that the state or series of states transferred is being sent when the time marker coincides with a recurring time value of the reference clock.

Description of embodiment

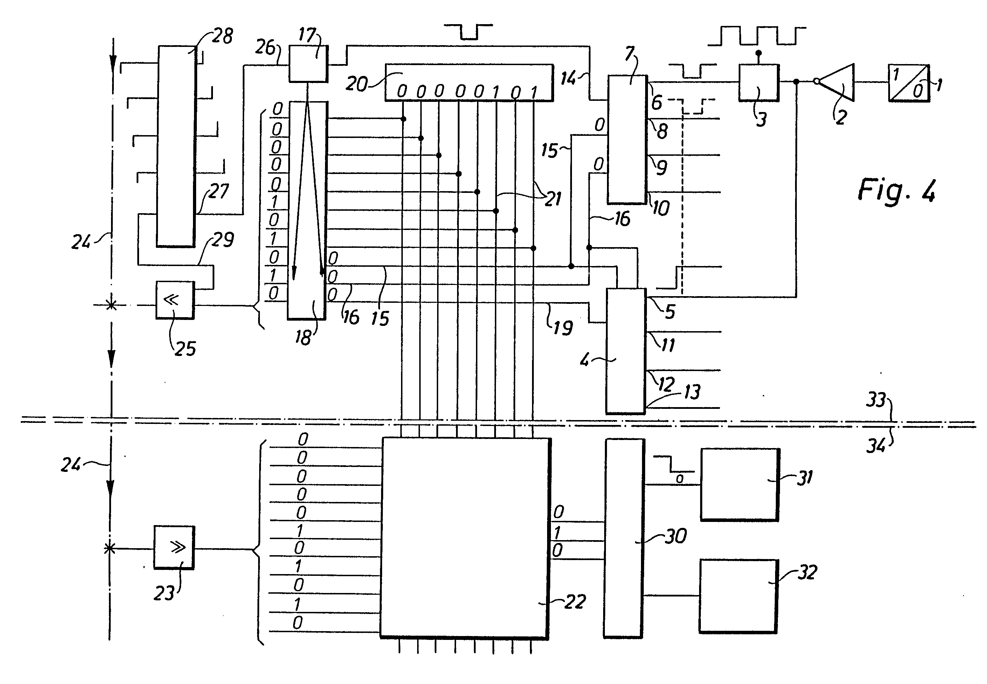

An embodiment of the invention will now be described in detail while referring to Figure 4 of the accompanying drawings, which schematically illustrates a system of transfer means and transmission paths between terminal and computer in which the invention is applied.

In the embodiment according to Figure 4, a terminal is denoted by the numeral 1 and arranged to generate both a "1" and a "0" state. In order to simplify the description only one terminal is considered, although a plurality of terminals is envisaged, with the appropriate duplication of components and circuitry. The terminal is connected to an inverting receiver 2, the output of which is connected a) to a circuit 3 for generating pulses representing state variations of the terminal, and b) to one input 5 of a data selector 4. The circuit 3 is adapted to receive signals synchronous with the time rate applicable to the whole system, as is indicated by a square wave above it. When a state change is generated in the terminal 1 and transmitted via the receiver 2, a pulse in negative logic is formed in the circuit 3, the time instant of this pulse being determined by the prevailing state of the applied system clock frequency (the square wave signal). The negative pulse on the output of the circuit 3 is applied to an input 6, as illustrated, of a priority and addressing circuit 7 (a so called 4 to 2 priority encoder). The circuit 7 is provided with a plurality of inputs, denoted 8, 9 and 10, which are connectable in a mode not shown in more detail to the pulse change generation circuits of other terminals and which are equivalent to the circuit 3. The data selector 4 is also provided with a plurality of inputs 11, 12 and 13 etc., intended for said other terminals (not shown). Three lines 14, 15 and 16 depart from the circuit 7. The line 14 is intended for transferring the previously mentioned generated change pulse, while the lines 15 and 16 are intended to carry information concerning the respective terminal address, i.e. to transfer states of which the combinations indicate the connected terminal in question, the terminal 1 in the present case. The line 14 communicates with an operation sequence and address controlling circuit 17, while the lines 15 and 16 are in controlling communication with the data selector 4 and with a transmitting circuit 18. A line 19 departs from the data selector 4 for transferring data information emanating from the terminal 1 to said transmitting circuit 18. The operation sequence and address control circuit 17 control the transmitting circuit 18. The circuit 17 preferably comprises a microprocessor. A binary reference clock 20 is connected to the transmitting circuit 18 via eight lines all denoted by the numeral 21. These lines are also connected with a receive circuit 22 or several such circuits (not shown). The input of the circuit 22 is connected to the output of the transmitting circuit 18 via an address comparing circuit 23, a data bus 24 and a buffer circuit 25. The circuit 17 is connected to the input 27 of a priority circuit 28 via a line 26. One of the priority circuit outputs is connected to a control input of the buffer circuit 35 via a line 29. As indicated, the priority circuit 28 is provided with a plurality of further inputs and outputs, said inputs being intended for connection to other circuits equivalent to the circuit 17, and said outputs being intended for connection to buffer circuits equivalent to the circuit 25, these equivalent circuits being associated with other sections of the system.

The receive circuit 22 controls a circuit 30 which distribute the data state in response to current address information to either of two different computers 31 and 32. Two chaindotted lines 33 and 34 go right across the diagram to indicate two parts of the system which are in connection with each other via the data bus 24 and the lines 21. It should be mentioned that the reference clock 20 is time-synchronized with the time frequency of the whole circuit, but has its own periodicity, i.e. clock cycle.

It is assumed that the terminal sends and "1" state, i.e. the terminal goes from "0" to "1". The receiver 2 inverts this new signal, thus applying a "0" to the circuit 3, which generates a pulse signifying that a state change has taken place. Apart from what has been said above in connection with circuit 3, this circuit is such that for each change, i.e. for each alteration from "0" to "1", or vice versa, it sends a negative direct voltage pulse to input 6 of the circuit 7, where arrival priority relative the other inputs from lines 8—10 is decided. Further an address state is being generated which indicates that the change in this case comes from terminal 1. A "0" is now obtained on each of lines 15 and 16. The generation of the address state on lines 15 and 16 does not occur before the change pulse on the input 6 has actuated the circuit 7. As previously described, the lines 15 and 16 are also connected for control to the data selector 4, which signifies the applicable new data state "0" is not transferred via the line 19 before the address state is available on the lines 15 and 16. This signifies that the states of the lines 15, 16 and 19 are applied to the transmission circuit 18 substantially simultaneously. The change pulse on the line 14 also arrives at circuit 17 simultaneously as transfer of said state to transmission circuit 18, although initiation of the activity of the circuit 17 is not started until the trailing flank of the pulse on the line 14 has arrived at circuit 17.

In conjunction with the initiating of circuit 17, it senses information concerning the address of the respective terminal 1, i.e. the states transferred via the lines 15 and 16. The circuit 17 has at an earlier, not described occasion, been in communication with the terminal 1 for obtaining information that the terminal 1 desires to communicate with the computer 31. When the circuit 17 now receives address information indentifying the terminal 1, it generates a new address on the respective outputs of the transmitting circuit 18, which in practice is a register. In the present case the outgoing states are now "0" and "1", which in the present connection is assumed to represent the computer 31. In conjunction with the address change operation, transmission of the data state is now opened on the line 19 to the respective output in the transmitting circuit 18. Simultaneously herewith however, a time marker is created in that the instant time present on the reference clock 20 is applied to said register, this being assumed represented by the state 00000101 on the lines 21. The time created now appears on the outputs of the transmitting circuit 18, i.e. the appropriate register in the circuit 18 has now stored time, address and data states. These states are now applied to the input of the buffer circuit 25, to wait for their turn to be transmitted which is determined by the priority circuit 28. The clock 20 now continues its clock cycle, independent of all the changes in state or circuit condition which are in progress. This clock has a predetermined cycle selected such that the cycle is equal to or preferably longer than the longest transfer and waiting time, i.e. the time for transferring via the data bus 24 to the receive circuit 22 and the waiting time during the priority sequence.

It is assumed that after a certain waiting time determined by the priority circuit 28, and consituting a portion of the clock cycle of the clock 20, the states in the register of the transmitting circuit 18 are transferred to the data bus 24 after a triggering signal via the line 29. The states are now transferred to the address comparing circuit 23 via the data bus, this circuit sensing the respective address state and passing the states through to register and memory circuits in the receiver 22 equivalent to the circuit 18. The respective states corresponding to the above mentioned time marker state "00000101" as well as the address information "0", "1" and the data state "0" are now stored in the receive circuit 22. Meanwhile, the clock during its cycle is once again approaching the time corresponding to the state 00000101 on the lines 21, i.e. the time state which occurred when the new data state "0" was registered in the transmitting circuit 18. When said time state occurs on the receiver inputs from the lines 21, the register is read and the address states and the data state are sent by the receive circuit 22 to the distribution circuit 30, where the address state in question is detected, and said circuit 30 directs the respective data state "0" to the computer 31. The desired transmission and transfer sequence from the terminal 1 to the computer 31 is now terminated.

It will be seen from the above that each transfer of a data state is accompanied by a time marker. This marker accompanies the data state through the data bus but is released first when the clock 20, common to the system, has the same time state in its next consecutive period as the state of the time marker. What is thus achieved with the present apparatus is that all data states transmitted from a terminal to the computer are given a uniform time lag equal to the cycle of the reference clock incorporated in the system. The result of this is that no distortion of the data state occurs, even if varying time lags occur from the transmission circuit 18 to the receiver 22 after transfer via the data bus 24. For example, if a data transfer occurs at the clock time "10" and another at the clock time "25", for a clock cycle of 256 time units, the first transfer will be delayed by 256 time units, which naturally is also the case for the second one. The time difference between the transfers, however, will only be "15", i.e. the same time difference as at the data state generating instants. A constant transfer lag of 256 time units is present for every data message, but this has practically no importance since, as mentioned, all data time differences appearing at the computer 31 correspond with the time differences between the state changes at the terminal 1.

As pointed out above, there will be no distortion of the data condition in the system now described, although may be noted that during the transfer of the data state through the different circuits, certain time lags are introduced, but these have an entirely negligible effect on the total sequence. As already stated, a change pulse is generated in the circuit 3 when the square wave condition of the system clock rate permits, the change pulse generally starting somewhat displaced in relation to the actual time of the state change in the terminal. This, however, will be adjusted by the address states on the lines 15 and 16 coming from the priority circuit 7 and controlling the release of the data state on line 19 going out from the circuit 4, the state change thus being coordinated with the change pulse on the line 14.

With regard to the fact that the circuit 17 is not activated before the arrival of the end flank of the change pulse on the line 4, it is thus ensured that the states on the lines 15, 16 and 19 are always at the transmitting circuit 18 when the circuit 17 gives the command for address change, time reading and transfer of data state from the line 19 to the appropriate register. With regard to the order of priority in the circuits 4 and 7, certain time lags in respect of state change transfers may occur. Since as said above the transferred change pulse from the line 14 occurs simultaneously with the generation of the address state on lines 15 and 16, the output data state on the line 19 will always be controlled to synchronize with the change pulse on the line 14. It will thus be seen that all sequences are locked to real time synchronous with the system timing frequency. As mentioned, this also applies to the reference clock 20, although its cycle is not tied to the system timing frequency. When all states passing through the circuit 17 are locked in the register in the transmission circuit 18, the waiting time for transfer through the data bus 24 is not of any decisive importance, since the reference clock cycle is adapted to accommodate every conceivable transfer with priority through the circuit 28.

A practical case could have the following numerical values:—

The cycle of the clock 20 is 256 microseconds. The highspeed data bus 24 has a capacity of 4 million bits per second. 1024 changes in data state can be accommodated within these 256 microseconds, i.e. 1024 terminal state changes can be transmitted during each clock cycle. As already mentioned, the reference clock advantageously has a cycle which is longer than the longest conceivable time interval for a transfer via the data bus, and at the highest loading of the priority circuit 28, i.e. the longest waiting time for transfer.

In an actual embodiment, the different parts of the system may be built up from the following elements:—

Ref 2 = MC 1489 Motorola, Eia receiver
Ref 3 = 7474 and 7486 Texas Instrument Co.
Ref 4 = 74151 Texas Instrument Co.
Ref 7 = 74148 Texas Instrument Co.
Ref 17 = AMD (Advanced Micro Devices) micro processor
Ref 18 = AMD (Advanced Micro Devices) micro processor
Ref 20 = 74163 Texas Instrument Co.
Ref 22 = 2 port memory 156 words
Ref 23 = 26 LS — 32 AMD and Texas 7485
Ref 25 = 26 LS — 31 AMD
Ref 28 = 74148 and 74138 Texas Instrument Co.
Ref 30 = 74259 Texas Instrument Co.

A further advantage of the invention is that in the system now illustrated the data bus 24 does not need to be loaded with unnecessary data transfers if some of the terminals connected are idle, i.e. that the state from some terminal remains constant for a longer period of time. For example, if the state of terminal 1 remains high, no information concerning the data state is transferred from the transmitting circuit 18, since this circuit is activated by a change pulse only. Thus, a state change is necessary for a change pulse to occur on the line 14 to the ciruits 17 and 18. Considerable transfer economy is thus achieved, apart from the advantages of freedom from distortion which the time marking concept provides. The data bus thus can serve a large number of terminals without being overloaded.

So called data transparency, has been mentioned earlier, i.e. that the transmission means between terminal and computer have essential similarities with means of a telephone exchange, i.e. any conversion or manipulation of data information as such between terminal and computer is not permitted. In the system now described, all transfers of data states are carried out with a fixed time delay. This may be regarded as a manipulation of data information and a step away from the transparency conditions, but since the continued transfer of states in the course of using the system results in that all data states are delayed by the same interval in the clock cycle, the transmission is to be regarded as transparent. This is the case for reverse communication, too, i.e. from computer to terminal, where equivalent system structures will be used.

The embodiment described above is only one example of many of how the invention can be carried out in practice, whether the method or system is limited to state transfer in binary form or not. Binary technique is to be preferred however, and the invention will come into its own in this field particularly. The basic inventive concept is that each data state will be transmitted from terminal to computer accompanied by a time marker from an arbitrary reference clock time and that the data state is stored until the clock once again shows the time corresponding to the time marker of the respective data state, which enables this state to be transferred to the respective computer or other circuit. In accordance with the invention, an embodiment may be conceived in which the respective data is stored in the receive circuit together with the time marker and is sent not at a consecutive cycle but after two or more consecutive clock cycles, if this is found suitable with respect to the traffic conditions or system construction. The above embodiment is designed for providing each state (to be transferred) with one time marker. However, within the concept of the invention it is possible to transfer a series of states having one time marker for the whole series including the use of e.g. UART circuits.

**Claims**

1. A method, e.g. in a data distribution system, for, inter alia, avoiding distortion in transferring signal states, each state or series of states which are to be transferred being accompanied by a time marker (Figure 4) generated in conjunction with the transfer in response to the actual time (00000101) given by a cyclically operating reference clock (20) characterized in that the time marker is generated by instantaneous storage of the instant time on the reference clock (20) when the transfer (18) is initiated (17), said state, or series of states, with their time marker being stored after transfer (24) in a receive (22) register, said register being read (21) by the continuously operating clock (20) and triggers the sending of the respective state or series of states to a destination (31) when the time marker (00000101) and the clock time coincide, whereby each state or series of states will be delayed a predetermined time, controlled by the cycles of the clock (20), while retaining the same mutual time differences between consecutive states or series of states.

2. A method as claimed in claim 1, characterized in that each state or series of states stored together with the (00000101) time marker states in said register are subjected to order of priority (24) relative other equal state conditions before the transmission, said clock cycle being set such that it at least embraces said transmission time and delay caused by the order of priority (25, 28).

3. A method as claimed in claim 1, characterized in that the time marker is constituted by binary states in combinations (00000101) generated by the clock (20) such a combination being stored at a particular instant in a register (18) together with said state or series of states for transfer (24) within a clock cycle in progress.

4. A method as claimed in claim 1, characterized in that the transfer of a state or series of states is only initiated in response to a change (3) in the state of a unit (1) generating the said state or series of states.

5. Apparatus for carrying out the method in accordance with claim 1, e.g. a data distribution system for transferring states preferably between a state generating unit which cooperates with the transferring means and one or more state receiving units within the system, a cyclically operating reference clock (20) common to certain transferring means, each state or series of states in conjunction with transfer being accompanied by the time marker which is dependent on the instant time read by a registration circuit (18) from the reference clock, whereby said state or series of states are arranged for being applied to a receiver (22) in connection with the state receiving unit (31), and whereby the receiver (22) communicates with the reference clock (20) such that the state or series of states transferred is being sent when the time marker coincides with a recurring time value of the reference clock (20).

6. Apparatus as claimed in claim 5, characterized in that the reference clock (20) is in communication (21) with one or more transmission circuits (18) and one or more receivers (22), the respective transmission circuit being controlled by an operation sequence controlling circuit (17) controlling the transfer of the time states of the clock (20) to a register for storage, in which simultaneously said state or series of states are stored too.

7. Apparatus as claimed in claim 5, characterized in that the transmission circuit (18) register is in communication with a buffer circuit (25) in turn controlled by a priority circuit (28), to one input of which are supplied operation states from the operation sequence controlling circuit (17).

8. Apparatus as claimed in claim 7, characterized in that the buffer circuit (25) communicates with a transfer means such as a data bus (24) or the like, said buffer circuit (25) being adapted for passing to said data bus the states in the transmitting circuit (18) register.

9. Apparatus as claimed in claim 5, characterized in that the receiver (22) is connected to the data bus (24) via an address comparing circuit (23) actuated by address states accompanying the respective data state.

10. Apparatus as claimed in claim 5, characterized in that the reference clock (20) is of the binary type, whereby lines (21) carrying the clock states are connected to the transmitting circuit (18) and to a register associated with said receiver (22) for reading said register which is adapted for storing, inter alia, the states (00000101) transferred via the data bus (24) and forming said time marker.

11. Apparatus as claimed in claim 9, characterized in that the receiver (22) output communicates with a data receiving unit such as a computer (31, 32) to which respective states be sent.

12. Apparatus as claimed in claim 5, characterized in that state transmission takes place as a result of a state change in a state generating unit (1), a signal (2) generated by the state change controlling activation of the operation sequence controlling circuit (17), which thereby commences transfer and registration of data states via the transmitting circuit (18) and simultaneously registration of the appropriate reference clock state (00000101).

13. Apparatus as claimed in claim 5, characterised in that the state generating unit comprises a terminal (1) in communication with a change pulse generating unit (3) and an input (5) of a data selector (4), the change pulse generating unit (3) also being in communication with an input (6) of a priority circuit (7) which, on passing through a change pulse, generates address states ("0", "0") representative of the connected terminal (1), said states being arranged via lines (15, 16) to control initiation of data state ("0") transfer from the terminal (1) via data selector (4) to the transmission circuit (18), said lines (15, 16) also communicating with the transmission circuit (18) together with a line (19) carrying the appropriate data state from the data selector (4).

14. Apparatus as claimed in claim 13, characterized in that the priority circuit (7) is connected (14) with the operation sequence controlling circuit (17) for transferring change pulses thereto.

**Patentansprüche**

1. Verfahren, z. B. in einem Datenverteilsystem, u. a. zur Vermeidung von Verzerrung bei der Übertragung von Signalzuständen, bei dem jeder Zustand oder jede Reihe von Zuständen, die zu übertragen sind, von einem in Verbindung mit der Übertragung ansprechend auf die von einem zylkisch arbeitenden Bezugszeitgeber (20) vorgegebene, tatsächliche Zeit (00000101) erzeugten Zeitkennzeichen (Fig. 4) begleitet werden, dadurch gekennzeichnet, daß das Zeitkennzeichen durch eine momentane Speicherung der Momentzeit auf dem Bezugszeitgebar (20), wenn die Übertragung (18) eingelietet wird (17), erzeugt wird, wobei der Zustand oder die Reihe von Zuständen mit ihren Zeitkennzeichen nach der Übertragung (24) in einem Empfangsregister (22) gespeichert werden, das Register durch den kontinuierlich arbeitenden Zeitgeber (20) gelesen (21) wird, und die Sendung des betreffenden Zustandes oder der Reihe von Zuständen an einem Bestimmungsort (31) triggert, wenn das Zeitkennzeichen (00000101) und die Zeitgeberzeit zusammenfallen, wodurch jeder Zustand oder jede Reihe von Zuständen, gesteurt durch die Zyklen des Zeitgebers (20), für eine vorbestimmte Zeit verzögert wird, während derselbe wechselseitige Zeitunterschied zwischen den Zuständen oder den Reihen von Zuständen beibehalten wird.

2. Verfahren nach Anspruch 1, dadurch gekennzeichnet, daß jeder Zustand oder jede Reihe von Zuständen, die zusammen mit den (00000101) Zeitkennzeichenzuständen in dem Register gespeichert sind, vor der Übertragung einer Prioritätsreihenfolge (24) in Bezug auf andere gleiche Zustandsbedigungen unterworfen werden, wobei der Zeitgeberzyklus derart eingestellt wird, daß er mindestens die Übertragungszeit und die durch die Prioritätsreihenfolge (25, 28) hervorgerufene Verzögerung einschließt.

3. Verfahren nach Anspruch 1, dadurch gekennzeichnet, daß das Zeitkennzeichen durch Binärzustände gebildet ist, die in Kombinationen (00000101) durch den Zeitgeber (20) erzeugt werden, wobei eine derartige Kombination zu einem bestimmten Zeitpunkt zusammen mit dem Zustand oder der Reihe von Zuständen in einem Register (18) zur Übertragung (24) innerhalb des fortschreitenden Zeitgeberzyklus gespeichert wird.

4. Verfahren nach Anspruch 1, dadurch gekennzeichnet, daß die Übertragung eines Zustands oder einer Reihe von Zuständen nur ansprechend auf eine Änderung (3) in dem Zustand einer dem Zustand oder die Reihe von Zuständen erzeugenden Einheit (1) eingeleitet wird.

5. Vorrichtung zur Durchführung des Verfahrens gemäß Anspruch 1, z. B. in einem Datenverteilsystem zur Übertragung von Signalzuständen vorzugsweise zwischen einer mit der Übertragungseinrichtung zusammenwirkenden Zustandserzeugungseinheit und einer oder mehreren Zustandempfangs-einheiten innerhalb des Systems, einem einer bestimmten Übertragungseinrichtung angehörenden zyklisch arbeitenden Bezugszeitgeber (20), wobei jeder Zustand oder jede Reihe von Zuständen in Verbindung mit der Übertragung von einem Zeitkennzeichen begleitet wird, das von dem durch einen Registierschaltkreis (18) von dem Bezugszeitgeber abgelesen momentanen Zeitwert abhängig ist, wodruch der Zustand oder die Reihe von Zuständen zur Anlegung an einen Empfänger (22) in Verbindung mit der Zustandsempfangseinheit (31) aufbereitet werden, und wodurch der Empfänger (22) derart mit dem Bezugszeitgeber (20) in zusammenwirkenden Informationsaustausch steht, daß der übertragene Zustand oder die Reihe von Zuständen gesendet wird, wenn das Zeitkennzeichen mit einem wierderkehrenden Zeitwert des Bezugszeitgebers (20) zusammenfällt.

6. Vorrichtung nach Anspruch 5, dadurch gekennzeichnet, daß der Bezugszeitgeber (20) mit einem oder mehreren Übertragungsschaltkreisen (18) und einem oder mehreren Empfängern (22) in Informationsverbindung (21) steht, wobei der betreffende Übertragungsschaltkreis durch einen Befehlsfolgesteuerschaltkreis (17) gesteuert ist, der die Übertragung der Zeitzustände des Zeitgebers (20) an ein Register zur Speicherung steuert, in dem gleichzeitig auch der Zustand oder die Reihe von Zuständen gespeichert werden.

7. Vorrichtung nach Anspruch 5, dadurch gekennzeichnet, daß das Register des Übertragungsschaltkreises (18) mit einem Pufferschaltkreis (25) in Informationsverbindung steht, der seinerseits durch einen Prioritätsschaltkreis (28) gesteuert ist, der an einem seiner Eingänge mit Befehlszuständen aus dem Befehlsfolgesteuerschaltkreis (17) beaufschlagt ist.

8. Vorrichtung nach Anspruch 7, dadurch gekennzeichnet, daß der Pufferschaltkreis (25) mit einer Übertragungseinrichtung wie einer Datensammelleitung (24) oder dergleichen in Informationsverbindung steht, wobei die Zustände in dem Register des Sendeschaltkreises (18) durch den Pufferschaltkreis (25) zu der Datansammelleitung überführbar sind.

9. Vorrichtung nach Anspruch 5, dadurch gekennzeichnet, daß der Empfänger (22) mit der Datensammelleitung (24) über einen Adressenvergleichsschaltkreis (23) verbunden ist, der durch den betreffenden Datenzustand begleitende Adreßzustände betätigt wird.

10. Vorrichtung nach Anspruch 5, dadurch gekennzeichnet, daß der Bezugszeitgeber (20) von Binärtyp ist, wobei Zeitzustände fürende Leitungen (21) an den Sendeschaltkreis (18) und ein dem Empfänger (22) zugeordnetes Register zum Lesen dieses Registers angeschlossen sind, durch welches u. a. die über die Datensammellietung (24) übertragenen und das Zeitkennzeichen bildenden Zustände (00000101) speicherbar sind.

11. Vorrichtung nach Anspruch 9, dadurch gekennzeichnet, daß der Ausgang des Empfängers (22) mit einer Datenempfangseinheit wie einem Computer (31, 32) in Informationsverbindung steht, an die die betreffenden Zustände zu senden sind.

12. Vorrichtung nach Anspruch 5, dadurch gekennzeichnet, daß die Zustandsübertragung als Ergebnis einer Zustandsänderung in einer Zustandserzeugungseinheit (1) stattfindet, wobei ein durch die Zustandsänderung erzeugtes Signal (3) die Aktivierung des Befehlsfolgesteuerschaltkreises (17) steuert, welcher dadurch die Übertragung und Registierung von Datenzuständen über die Sendeeinheit (18) und die gleichzeitige Registrierung des betreffenden Bezugszeitgeberzustandes (00000101) beginnt.

13. Vorrichtung nach Anspruch 5, dadurch gekennzeichnet, daß die Zustandserzeugungseinheit eine mit einer Änderungsimpulserzeugungseinheit (3) und einem Eingange (5) Datenwählers (4) in Informationsverbindung stehende Datenstation (1) aufweist, wobei die Änderungsimpulserzeugungseinheit (3) auch mit einem Eingang (6) eines Prioritätsschaltkreises (7) in Informationsverbindung steht, welcher bei der Durchleitung eines Änderungsimpulses die angeschlossene Datenstation (1) darstellende Adreßzustände ("0", "0") erzeugt, durch die über Leitungen (15, 16) die Einleitung der Übertragung des Datenzustands ("0") von der Datenstation (1) über den Datenwähler (4) zu dem Sendeschaltkreis (18) steuerbar ist, wobei die Leitungen (15, 16) zusammen mit einer den betreffenden Datenzustand von dem Datenwähler (4) führenden Leitung (19) auch mit dem Sendeschaltkreis (18) in Informationsverbindung stehen.

14. Vorrichtung nach Anspruch 13, dadurch gekennzeichnet, daß der Prioritätsschaltkreis (7) mit dem befehlsfolgesteuerschaltkreis (17) zur Übertragung von Änderungsimpulsen auf diesen verbunden (14) ist.

## Revendications

1. Un procédé, par exemple dans un système de distribution de données, pour, entre autres, éviter une distorsion dans le transfert d'états de signal, chaque état ou série d'états à transférer étant accompagné d'un marqueur de temps (figure 4) qui est produit en association avec le transfert sous la dépendance du temps réel (00000101) donné par une horloge de référence (20) fonctionnant de façon cyclique, caractérisé en ce que le marqueur de temps est produit par l'enregistrement instantané du temps présent de l'horloge de référence (20) lorsque le transfert (18) est déclenché (17), cet état, ou série d'états, avec son marqueur de temps étant enregistré après le transfert (24) dans un registre récepteur (22), ce registre étant lu (21) par l'horloge (20) fonctionnant continuellement et déclenchant l'émission de l'état respectif ou de la série d'états respective vers une destination (31) lorsque le marquer de temps (00000101) et le temps d'horloge coïncident, grâce à quoi chaque état ou série d'états sera retardé d'une durée prédéterminée, définie par les cycles de l'horloge (20), tout en conservant les mêmes différences de temps mutuelles entre des états ou des séries d'états consécutifs.

2. Un procédé selon la revendication 1, caractérisé en ce que chaque état ou série d'états enregistré en compagnie des états de marqueur de temps (00000101) dans le registre est soumis à un order de priorité (24) par rapport à d'autres conditions correspondant à des états égaux, avant la transmission, et le cycle d'horloge est fixé de façon qu'il englobe au moins la durée de transmission et le retard qui est produit par l'ordre de priorité (25, 28).

3. Un procédé selon la revendication 1, caractérisé en ce que le marquer de temps est constitué par des états binaires associés en combinaisons (00000101) produites par l'horloge (20), de façon qu'un combinaison soit enregistrée à un instant particulier dans un registre (18), en compagnie de l'état ou de la série d'états, pour le transfert (24) pendant un cycle d'horloge en cours.

4. Un procédé selon la revendication 1, caractérisé en ce que le transfert d'un état ou d'une série d'états n'est déclenché que sous l'effet d'un changement (3) dans l'état d'une unité (1) qui produit l'état ou la série d'états.

5. Appareil pour mettre en oeuvre le procédé selon la revendication 1, par exemple dans un système de distribution de données destiné à transférer des états de signal, de préférence entre une unité de génération d'états qui coopère avec les moyens de transfert, et une ou plusieurs unités de réception d'états dans le système, comprenant une horloge de référence (20) fontionnant de façon cyclique qui est commune à certain moyens de transfert, chaque état ou série d'états accompagné, en liaison avec le transfert, par un marqueur de temps qui dépend de l'instant lu par un circuit d'enregistrement (18) à partir de l'horloge de référence, grâce à quoi l'état ou la série d'états peut être appliqué à un récepteur (22) en relation avec l'unité de réception d'état (31), et le récepteur (22) communique avec l'horloge de référence (20) de façon que l'état ou la série d'états transféré soit émis lorsque le marquer de temps coïncide avec une valeur de temps récurrente de l'horloge de référence (20).

6. Appareil selon la revendication 5, caractérisé en ce que l'horloge de référence (20) est en communication (21) avec un ou plusieurs circuits émetteurs (18) et un ou plusieurs récepteurs (22), le circuit émetteur respectif étant commandé par un circuit de commande de séquence de fonctionnement (17) qui commande le transfert des états de temps de l'horloge (20) vers un registre, pour leur enregistrement, l'état ou la série d'états étant également enregistré simultanément dans ce registre.

7. Appareil selon la revendication 5, charactérisé en ce que le registre du circuit émetteur (18) est en communication avec un circuit tampon (25) que est lui, même commandé par un circuit de priorité (28) dont une entrée reçoit des états de fonctionnemente provenant du circuit de commande de séquence de fonctionnement (17).

8. Appareil selon la revendication 7, caractérisé en ce que le circuit tampon (25) communique avec des moyens de transfert tels qu'un bus de données (24) ou un élément analogue, et ce circuit tampon (25) est conçu de façon à transmettre au bus de données les états présents dans le registre du circuit émetteur (18).

9. Appareil selon la revendication 5, caractérisé en ce que le récepteur (22) est connecté au bus de données (24) par l'intermédiaire d'un circuit de comparaison d'adresse (23) qui est actionné par des états d'adresse accompagnant l'état de données respectif.

10. Appareil selon la revendication 5, caractérisé en ce que l'horloge de référence (20) est du type binaire et des lignes (21) acheminant les états d'horloge sont connectées au circuit émetteur (18) et à un registre associé au récepteur (22) pour lire ce registre qui est conçu de façon à enregistrer, entre autres, les états (00000101) qui sont transférés par le bus de données (24) et qui forment le marqueur de temps.

11. Appareil selon la revendication 9, caractérisé en ce que la sortie de récepteur (22) communique avec une unité de réception de données telle qu'un ordinateur (31, 32) vers lequel des états respectifs sont émis.

12. Appareil selon la revendication 5, caractérisé en ce que cette transmission d'états se produit sous l'effet d'un changement d'état dans une unité de génération d'état (1), un signal (3) produit par le changement d'état commande l'activation de circuit de commande de séquence de fonctionnement (17) qui commence ainsi le transfert et l'enregistrement d'états de données par l'intermédiaire du circuit émetteur (18) et l'enregistrement simultané de l'état d'horloge de référence approprié (00000101).

13. Appareil selon la revendication 5, caractérisé en ce que l'unité de génération d'état comprend un terminal (1) en communication avec une unité de génération d'impulsion de changement (3) et une entrée (5) d'un sélecteur de données (4), l'unité de génération d'impulsion de changement (3) étant également en communication avec une entrée (6) d'une circuit de priorité (7) qui, à la transmission d'une impulsion de changement, produit des états d'adresse ("0", "0") représentatifs du terminal connecté (1), ces états étant transmis par des lignes (15, 16) de façon à commander le déclenchement d'un transfert d'état de données ("0") à partir du terminal (1) vers le circuit emetteur (18) par l'intermédiaire de sélecteur de données (4), lesdites lignes (15, 16) communiquant également avec le circuit émetteur (18), conjointement à une ligne (19) qui achemine l'état de données approprié à partir du sélecteur de données (4).

14. Appareil selon la revendication 13, caractérisé en ce que le circuit de priorité (7) est connecté (14) au circuit de commande de séquence de fonctionnement (17) pour transférer des impulsions de changement vers celui-ci.

## Fig.1

## Fig.2

# Fig.3

Fig. 4

0 059 821